# EUROPÄISCHE PATENTSCHRIFT

(11) **EP 4 204 853 B1**
(45) Veröffentlichungstag und Bekanntmachung des Hinweises auf die Patenterteilung: **21.10.2026**
(21) Anmeldenummer: 21778350.5
(22) Anmeldetag: 23.08.2021
(51) Int. Cl.: G01S 13/86

(54) **VERFAHREN ZUR AUSFÜHRUNG DURCH EIN SENSORSYSTEM FÜR EINE VERKEHRSINFRASTRUKTUREINRICHTUNG UND SENSORSYSTEM**
METHOD FOR EXECUTION BY A SENSOR SYSTEM FOR A TRAFFIC INFRASTRUCTURE DEVICE, AND SENSOR SYSTEM
PROCÉDÉ DESTINÉ À ÊTRE MIS EN OEUVRE PAR UN SYSTÈME DE DÉTECTION POUR UN INSTALLATION D'INFRASTRUCTURE ROUTIÈRE ET SYSTÈME DE DÉTECTION

(30) Priorität: 25.08.2020 DE 102020210749
(43) Veröffentlichungstag der Anmeldung: 05.07.2023
(73) Patentinhaber: AUMOVIO Germany GmbH, 60488 Frankfurt am Main (DE)
(72) Erfinder: GOLDHAMMER, Michael, 60488 Frankfurt am Main (DE); QUITTENBAUM, Peter, 60488 Frankfurt am Main (DE)
(74) Vertreter: Aumovio Corporation
(86) Internationale Anmeldenummer: PCT/DE2021/200114
(87) Internationale Veröffentlichungsnummer: WO 2022/042806

(56) Entgegenhaltungen:
- EP-A1- 2 639 781
- EP-A1- 2 660 624

## Beschreibung

### [TECHNISCHES GEBIET]

Die vorliegende Erfindung betrifft ein Verfahren zur Ausführung durch ein Sensorsystem für eine Verkehrsinfrastruktureinrichtung gemäß Oberbegriff von Anspruch 1 sowie ein korrespondierendes Sensorsystem.

### [TECHNISCHER HINTERGRUND]

Im Bereich intelligenter Infrastruktursysteme für den Straßenverkehr werden immer häufiger leistungsfähige Kamera- und Radarsysteme eingesetzt. Sie ermöglichen die automatische Detektion und Lokalisierung von Fahrzeugen und anderen Verkehrsteilnehmern in einem weiten Erfassungsbereich und damit vielfältige Anwendungen, wie die intelligente Steuerung von Lichtsignalanlagen und Analysen zur längerfristigen Optimierung des Verkehrsflusses. In der Entwicklung befinden sich derzeit unterstützende Funktionen für Fahrerassistenzsysteme und das autonome Fahren insbesondere unter Verwendung von drahtloser Fahrzeug-zu-X Kommunikation bzw. diesbezüglich im speziellen der Infrastruktur-zu-X Kommunikation.

Werden Kameras und Radare parallel eingesetzt, ist es sinnvoll und je nach Anwendung sogar zwingend notwendig, die Daten beider Subsysteme zusammenzuführen, d. h. zu fusionieren. Für die Zuordnung der solchermaßen erfassten Objektdaten ist es i.d.R. erforderlich, dass eine Transformationsvorschrift zwischen den einzelnen Sensoren ("Kreuzkalibrierung") oder zwischen den Sensoren und einem weiteren, gemeinsam bekannten Koordinatensystem bekannt ist, insbesondere um die Daten eines durch die Kamera und das Radar parallel erfassten Objekts, wie zum Beispiel eines Verkehrsteilnehmers, einander zuordnen zu können. In der EP 2 639 781 A1 und der EP 2 660 624 A1 sind Verfahren für eine solche Transformation gezeigt.

Eine Kalibrierung der Sensoren wird dabei häufig mit Referenzobjekten durchgeführt, die im Sichtfeld der Sensoren an vermessenen Positionen platziert werden und in den Sensordaten manuell oder automatisch identifiziert werden können. Für eine statische Positionierung von Referenzobjekten muss dabei unter Umständen sogar in den laufenden Verkehrsfluss eingegriffen werden, z. B. müssen Fahrspuren bzw. die gesamte Fahrbahn zeitweise gesperrt werden.

Alternativ können vergleichsweise einfach identifizierbare statische Objekte, z. B. Fußpunkte von Verkehrsschildern, im überlappenden Erfassungsbereich von Kamera und Radar manuell markiert und einander zugeordnet werden. Dies setzt jedoch voraus, dass solche Objekte im überlappenden Sichtbereich der Sensoren in ausreichender Zahl vorhanden und diese in den Daten beider Sensortypen zudem eindeutig identifizierbar sind. Insbesondere die Fahrbahnoberfläche bietet normalerweise keine in den Radardaten identifizierbaren statischen Objekte.

Die beschriebenen Methoden setzen damit üblicherweise eine vergleichsweise umfangreiche manuelle Unterstützung zur Einrichtung voraus, z.B. zur manuellen Positionierung von Referenzobjekten oder zur Markierung von Positionen in den Sensordaten.

Weiterhin wird gelegentlich ein qualitativ hochwertiges und damit kostenintensives System zur Positionsbestimmung der Referenzobjekte in einem globalen Koordinatensystem, z. B. mittels Differential-GPS, vorausgesetzt.

Es besteht somit der Bedarf für eine die genannten Nachteile überwindende Lösung.

Die Erindung betrifft ein Verfahren zur Ausführung durch ein Sensorsystem für eine Verkehrsinfrastruktureinrichtung, wobei ein Erfassen von Verkehrsteilnehmern mittels zumindest einer Videokamera des Sensorsystems, welche einen ersten Erfassungsbereich der Verkehrsinfrastruktureinrichtung aufweist, und ein Erfassen von Verkehrsteilnehmern mittels zumindest einer Radareinrichtung des Sensorsystems, welche einen zweiten Erfassungsbereich der Verkehrsinfrastruktureinrichtung aufweist, wobei der erste Erfassungsbereich und der zweite Erfassungsbereich zumindest teilweise überlappen und zumindest eine Fahrbahn mit einer Mehrzahl an Fahrspuren der Verkehrsinfrastruktureinrichtung erfassen, dadurch gekennzeichnet, dass eine Transformationsvorschrift für eine Koordinatentransformation von mittels der Radareinrichtung erfassten Radardaten und von mittels der Videokamera erfassten Videodaten auf Grundlage einer Zuordnung von mittels der Videokamera erfassten Verkehrsteilnehmern zu mittels der Radareinrichtung erfassten Verkehrsteilnehmern bestimmt wird, wobei eine zeitlich kumulierte Erfassung von Positionsinformationen von mittels der Videokamera erfassten Verkehrsteilnehmern und eine zeitlich kumulierte Erfassung von Positionsinformationen von mittels der Radareinrichtung erfassten Verkehrsteilnehmern vorgenommen wird und eine Identifikation der jeweiligen Fahrspuren anhand der mittels Videokamera erfassten zeitlich kumulierten Positionsinformationen und eine Identifikation der jeweiligen Fahrspuren anhand der mittels der Radareinrichtung erfassten zeitlich kumulierten Positionsinformationen erfolgt, dadurch gekennzeichnet, dass Haltepositionen der Verkehrsteilnehmer bezüglich der jeweiligen Fahrspuren unter Heranziehung der mittels der Videokamera erfassten zeitlich kumulierten Positionsinformationen und Haltepositionen der Verkehrsteilnehmer bezüglich der jeweiligen Fahrspuren unter Heranziehung der mittels der Radareinrichtung erfassten zeitlich kumulierten Positionsinformationen ermittelt werden und eine Zuordnung zwischen den mittels der Videokamera ermittelten Haltepositionen und den mittels der Radareinrichtung ermittelten Haltepositionen vorgenommen wird.

Des Weiteren , gemäß einer Ausführungsform, werden Haltepositionen der Verkehrsteilnehmer bezüglich der jeweiligen Fahrspuren unter Heranziehung der mittels der Videokamera erfassten zeitlich kumulierten Positionsinformationen und der mittels der Radareinrichtung erfassten zeitlich kumulierten Positionsinformationen ermittelt. Insbesondere werden hierbei die vorderen Haltepositionen der Verkehrsteilnehmer erfasst. Dies ist beispielsweise dann gegeben, wenn die Verkehrsteilnehmer an einer Haltelinie einer Kreuzung stoppen.

Die Zuordnung von mittels der Videokamera erfassten Verkehrsteilnehmern zu mittels der Radareinrichtung erfassten Verkehrsteilnehmern und Bestimmung der Transformationsvorschrift erfolgt hierbei automatisiert.

Beispielsweise erfolgt die Radarerfassung in Koordinaten eines Radarkoordinatensystems, bspw. x-y-Koordinaten, und die Kameraerfassung erfolgt zweckmäßigerweise in einem Pixel-Raster bzw. Pixel-Koordinatensystem der Videokamera. Entsprechend zumindest einer Ausführungsform definiert die Transformationsvorschrift eine Koordinatentransformation zwischen einem Radarkoordinatensystem in welchem die Radardaten erfasst werden und einem Kamerakoordinatensystem in welchem die Videodaten erfasst werden und/oder eine Koordinatentransformation von dem Radarkoordinatensystem und dem Kamerakoordinatensystem in ein drittes Koordinatensystem. Im Falle der Transformation in ein drittes Koordinatensystem sind Transformationsvorschriften aus den jeweiligen Koordinatensystemen in das dritte Koordinatensystem vorgesehen. Mittels der ermittelten Transformationsvorschrift ist somit eine Zuordnung von in dem einen Koordinatensystem erfassten Objekten bzw. Verkehrsteilnehmern und in dem anderen Koordinatensystem erfassten mutmaßlich identischen Objekten bzw. Verkehrsteilnehmern möglich. Die erfassten Verkehrsteilnehmer können grundsätzlich in das von dem Radarkoordinatensystem und Kamerakoordinatensystem verschiedene dritte Koordinatensystem zur weiteren Verarbeitung dargestellt werden.

Entsprechend zumindest einer Ausführungsform erfolgt eine Identifikation der jeweiligen Fahrspuren der Fahrbahn anhand der mittels Videokamera erfassten zeitlich kumulierten Positionsinformationen und parallel dazu eine Identifikation der jeweiligen Fahrspuren der Fahrbahn anhand der mittels der Radareinrichtung erfassten zeitlich kumulierten Positionsinformationen. Somit wird insbesondere unabhängig voneinander in den Bildern der Videokamera bzw. anhand der Videodaten sowie anhand der Radardaten eine Identifikation der jeweiligen Fahrspuren vorgenommen. In Folge der jeweiligen kumulierten Erfassung der Positionsinformationen bilden sich deutliche Häufungen von Detektionen im Besonderen auf den Mittelachsen der Fahrspuren der Fahrbahn aus. Diese Maxima können entsprechend für die Identifikation der jeweiligen Fahrbahnen herangezogen werden.

Entsprechend wenigstens einer Ausführungsform werden an ermittelte Maxima der mittels der Videokamera erfassten zeitlich kumulierten Positionsinformationen und/oder an ermittelte Maxima der mittels der Radareinrichtung erfassten zeitlich kumulierten Positionsinformationen Polynomzüge, insbesondere Splines, approximiert. Wie bereits beschrieben bilden sich deutliche Häufungen von Detektionen üblicherweise auf den Mittelachsen der Fahrspuren. An ermittelte Maxima dieser Häufungen werden entsprechend dieser Ausführung Polynomzüge approximiert, welche damit die Fahrspurverläufe in den jeweiligen Sensorkoordinatensystemen mathematisch repräsentieren.

Weiterbildungsgemäß erfolgt die zeitlich kumulierte Erfassung von Positionsinformationen von mittels der Videokamera erfassten Verkehrsteilnehmern und/oder die zeitlich kumulierte Erfassung von Positionsinformationen von mittels der Radareinrichtung erfassten Verkehrsteilnehmern über eine vorgegebene und/oder anpassbare Zeitdauer. Unter anpassbar in diesem Sinne sei insbesondere eine manuell änderbar vorgebbare Zeitspanne und/oder eine automatisierte Anpassung der Zeitdauer in Abhängigkeit oder bis zum Erreichen einer vorgegebenen Bedingung verstanden. Die Bestimmung der Transformationsvorschrift bzw. Kalibrierung kann insbesondere während des laufenden Straßenverkehrs erfolgen. Die Notwendigkeit zusätzlicher Referenzobjekte entfällt und es werden keine hochgenau vermessenen Referenzpositionen benötigt. Auch kann es vorgesehen sein, die automatisierte Bestimmung der Transformationsvorschrift nach einem definierten Zeitraum beispielsweise im Bereich von einigen wenigen Minuten bis Stunden abzuschließen und anschließend für die Erfassung heranzuziehen.

Die Kalibrierung kann demgegenüber auch permanent oder wiederholend während des laufenden Betriebs der Verkehrsinfrastruktureinrichtung erfolgen. Hierdurch können ggf. über die Zeit erfolgte Änderungen ausgeglichen bzw. eine beständige Optimierung vorgenommen werden, wofür insbesondere ein Vergleich einer solchen erneuten Kalibrierung mit einem Ergebnis der Ursprungskalibrierung bzw. eines vorhergehenden Kalibrierungsergebnisses vorgesehen sein kann. Hierdurch kann eine automatische Erkennung einer Fehlausrichtung ("Misalignment") der Sensoren festgestellt werden.

Entsprechend wenigstens einer Ausführungsform wird eine Ermittlung vorderer Haltepositionen der Fahrspuren vorgenommen, wobei ein Maximum der zeitlich kumulierten Positionsinformationen der betreffenden Fahrspur ermittelt wird. Das Maximum der Erfassung ergibt sich hierbei insbesondere aus der im Vergleich zur Erfassung bewegter Verkehrsteilnehmer zeitlich längeren Verweildauer an einem Ort und somit für diesen Ort häufigeren Erfassung über eine betreffende Zeitdauer. Weiterbildungsgemäß kann vorgesehen sein, zu diesem Zweck unmittelbar im Wesentlichen stehende Objekte der betreffenden Fahrspur zu ermitteln, falls die Geschwindigkeit der Objekte ermittelbar ist. Alternativ oder in Ergänzung kann vorgesehen sein, die zu der Videokamera und/oder der Radareinrichtung nächstgelegenen lokalen Maxima als Halteposition für die jeweiligen Fahrspuren heranzuziehen. Voraussetzung dafür ist jedoch die jeweilige Anordnung der Sensoren sowie der entsprechende Erfassungsbereich in Richtung der erfassten Fahrbahn mit nächstliegenden Haltelinien. Diese Vorgehensweise kann auch als Kriterium bzw. zur Unterstützung der Auffindung eines entsprechenden Maximums in Kombination mit wenigstens einer der vorher beschriebenen Vorgehensweise, beispielsweise als Startpunkt einer entsprechenden Suche, verwendet werden.

Entsprechend zumindest einer Ausführungsform wird eine Zuordnung zwischen den mittels der Videokamera ermittelten Haltepositionen und den mittels der Radareinrichtung ermittelten Haltepositionen vorgenommen.

Weiterbildungsgemäß wird hierzu insbesondere eine zeitliche Belegung von anhand der Videodaten identifizierten Haltepositionen mit anhand der Radardaten identifizierten Haltepositionen kombiniert. Es ergibt sich eine Anzahl an Assoziationsmöglichkeiten, welche dem Produkt aus der Anzahl der identifizierten Haltepositionen der Videodaten und der Anzahl der identifizierten Haltepositionen der Radardaten entspricht. Für die Kombination kann beispielsweise jeweils der binäre Belegungszustand - Fahrzeug an Halteposition ja oder nein - über eine gewisse Zeitspanne von zum Beispiel einige Minuten mittels einer XNOR-Verknüpfung kombiniert werden. Eine XNOR Verknüpfung ergibt eine 1 bei gleichem und eine 0 bei ungleichem Zustand. Haltepositionen, für die eine vorgegebene Mindestanzahl von Wechseln des Belegungszustands (0→1, 1→0) während der vorgegebenen Erfassungszeit nicht erreicht werden, werden insbesondere ignoriert oder die Erfassungszeit entsprechend verlängert, um eine ausreichende statistische Auswertungsgrundlage zu gewährleisten. Die Kombinationsmöglichkeiten können insbesondere nach Zeitanteil bzw. Anzahl übereinstimmender Ausgangswerte sortiert und hieraus bspw. zumindest eine Assoziationstabelle mit den wahrscheinlichsten Zuordnungen der Haltepositionen aus den Radardaten und Videodaten erstellt werden.

Eine ergänzend oder alternativ anwendbare Methode, nicht gemäß der Erfindung, die sich im Besonderen auch für Sensoren eignet, die nichtbinäre oder kontinuierliche Daten liefern können, wie z.B. die Belegungswahrscheinlichkeit einer Halteposition, ist die Betrachtung der Kreuzkovarianz. Diese kann als kreuzweises Assoziationsmaß zwischen den verschiedenen Sensorausgaben bestimmt werden, um die Zuordnung der Haltepositionen aus den Videodaten und Radardaten festzustellen.

Entsprechend zumindest einer Ausführungsform wird eine Zuordnung zwischen den mittels der Videokamera identifizierten Fahrspuren und den mittels der Radareinrichtung identifizierten Fahrspuren auf Basis der zugeordneten Haltepositionen der Verkehrsteilnehmer vorgenommen.

Weiterbildungsgemäß wird dabei eine Zuordnung zwischen mittels der Videokamera erfassten Verkehrsteilnehmern und mittels der Radareinrichtung erfassten Verkehrsteilnehmern unter Berücksichtigung der zugeordneten Fahrspuren vorgenommen.

Entsprechend wenigstens einer Ausführungsform erfolgt für die Identifikation der Fahrspurverläufe durch kumulierte Erfassung der Verkehrsteilnehmerpositionen eine Auswahl der von der Videokamera und der Radareinrichtung erfassten Verkehrsteilnehmer nach Verkehrsteilnehmern, die sich bewegen oder zuvor schon bewegt haben, und/oder Verkehrsteilnehmern, die als Fahrzeug klassifiziert wurden. Hierfür kann es sich als zweckmäßig erweisen eine Klassifizierung der erfassten Verkehrsteilnehmer in Kamera- und/oder Radardaten heranzuziehen bzw. entsprechend klassifizierte Objektdaten durch die verarbeitende Recheneinrichtung zu empfangen.

Entsprechend wenigstens einer Ausführungsform erfolgt die Zuordnung zwischen den mittels der Videokamera ermittelten Haltepositionen und den mittels der Radareinrichtung ermittelten Haltepositionen, indem ein Vergleich erfasster Zeitpunkte vorgenommen wird, an denen sich Verkehrsteilnehmer an den Haltepositionen befinden und/oder auf die Haltepositionen bewegen und/oder die Haltepositionen verlassen. Ein vergleichsweise eindeutiger Fall ist gegeben, wenn beispielsweise lediglich ein Verkehrsteilnehmer auf der Fahrbahn durch die Radareinrichtung und die Videokamera erfasst wird. Bewegt sich dieser sich zu einem bestimmten Zeitpunkt auf eine identifizierte Halteposition, kann diese Halteposition bereits grundsätzlich als identisch bezüglich der Erfassung durch die Radareinrichtung und die Videokamera zugeordnet werden. Da mittels der Radareinrichtung und der Videokamera erfasste Verkehrsteilnehmer prinzipiell noch nicht zugeordnet werden können und die Situation sich eher selten so eindeutig erweisen dürfte, ist insbesondere eine statistische Auswertung der Zeitpunkte vorgesehen. Hierbei kann angenommen werden, dass es in der Realität vergleichsweise unwahrscheinlich ist, dass Verkehrsteilnehmer über eine betrachtete Zeitdauer zu identischen Zeitpunkten eine Halteposition anfahren. Über eine betrachtete Zeitdauer hinweg ergibt sich somit infolge auch vergleichsweise geringer Zeitunterschiede bezüglich des Befahrens von Haltepositionen mehrerer Verkehrsteilnehmer statistische Zuordnungsmöglichkeiten der mittels der Radareinrichtung und der Videokamera erfassten Haltepositionen. Ebensolches gilt für das Verbleiben an den Haltepositionen sowie das Verlassen der Haltepositionen bzw. in Zusammenschau dieser Ereignisse.

Entsprechend wenigstens einer Ausführungsform wird anhand der zugeordneten Haltepositionen die Zuordnung zwischen den mittels der Videokamera identifizierten Fahrspuren und den mittels der Radareinrichtung identifizierten Fahrspuren vorgenommen. Dies ist dadurch effektiv möglich, da die Haltepositionen Maxima der bereits ermittelten Fahrspuren bilden und diesen somit unmittelbar zugeordnet sind und die Zuordnung der Haltepositionen der verschiedenen Sensorkoordinatensysteme damit die Zuordnung der Fahrspuren ermöglicht.

Entsprechend wenigstens einer Ausführungsform wird eine Zuordnung zwischen mittels der Videokamera erfassten Verkehrsteilnehmern und mittels der Radareinrichtung erfassten Verkehrsteilnehmern unter Berücksichtigung der zugeordneten Fahrspuren in der Weise vorgenommen, dass der mittels der Radareinrichtung erfasste Verkehrsteilnehmer, der sich auf einer bestimmten Fahrspur zu einem Zeitpunkt am nächsten an der Halteposition befindet, dem mittels der Videokamera erfassten Verkehrsteilnehmer entspricht, welcher auf der dieser Fahrspur zugeordneten Fahrspur am nächsten an der dieser Halteposition zugeordneten Halteposition befindet.

Weiterbildungsgemäß kann vorgesehen sein, auch Verkehrsteilnehmer, welche am zweit-, dritt- etc. nächsten an den Haltepositionen angeordnet sind, jeweils zuzuordnen. Ggf. kann es jedoch zu einer höheren Fehlerquote kommen, da es möglicherweise aufgrund von (Teil-)Verdeckungen durch näher an der betreffenden Halteposition befindliche Verkehrsteilnehmer zu ungenaueren Erfassungen betreffender Verkehrsteilnehmer kommen kann.

Entsprechend wenigstens einer Ausführungsform werden von der Radareinrichtung und/oder der Videokamera bereitgestellte Klassifikationsinformationen zur Erfassung und/oder Zuordnung und/oder Verifizierung der Zuordnung der Verkehrsteilnehmer herangezogen.

Entsprechend wenigstens einer Ausführungsform wird zur Ermittlung der Transformationsvorschrift für zumindest einen zugeordneten Verkehrsteilnehmer an zumindest einem Zeitpunkt zumindest ein zugeordnetes Punktepaar in Radar- und Kamerakoordinaten gespeichert. Ein Punkt repräsentiert hierbei ein erfasstes Element in den Koordinatensystemen, beispielsweise ein Pixel der Videokamera und ein Messpunkt bei der Radareinrichtung. Über die betrachtete Zeitdauer ergeben sich somit zwei Punktmengen mit jeweils einem eineindeutig zugeordneten (korrespondierenden) Punkt in der anderen Menge. Weiterbildungsgemäß wird aus den solchermaßen generierten Punktmengen eine Homographiematrix zwischen einer Radardetektions- und Kamerabildebene bestimmt. Bei der Homographie handelt es sich um eine projektive Transformation zwischen den Bildkoordinaten der Videokamera und der Detektionsebene der Radareinrichtung, oder eine projektive Transformation zwischen den Bildkoordinaten und der Bodenebene vor der Radareinrichtung. Die zweite Ausführungsform ist insbesondere zweckmäßig, wenn die Montageposition wie bspw. Höhe und Neigungswinkel der Radareinrichtung bekannt ist.

Entsprechend wenigstens einer Ausführungsform wird zumindest ein Optimierungsverfahren zur Vermeidung von Detektions- und Zuordnungsfehlern der erfassten Punkte, wie beispielsweise RANSAC, eingesetzt. Da üblicherweise deutlich mehr Punktpaare erzeugt werden, als für die Homegraphieberechnung benötigt werden, beispielsweise vier korrespondierende Punktpaare, ergibt sich hierdurch auch keine Verschlechterung der Genauigkeit der berechneten Transformationsvorschrift bzw. der Homographiematrix.

Eine ggf. vorhandene Verzeichnung durch die Kameraoptik kann dabei dann als vernachlässigbar betrachtet werden, wenn diese applikationsspezifisch als unwesentlich bewertbar ist und/oder vorab durch eine intrinsische Kalibrierung korrigierbar ist und/oder direkt aus den erzeugten Punktpaaren ermittelbar ist, z. B. mittels der Methode von Bouget.

Entsprechend wenigstens einer Ausführungsform wird die extrinsische Kalibrierung der Videokamera relativ zum Radar ermittelt, wobei die korrespondierenden Punktpaare als Perspectiven-Point (PnP-) Problem betrachtet werden. Ein solches kann beispielsweise mittels RANSAC gelöst werden, z.B. mittels der Methodik von Bouguet. Die extrinsische Kalibrierung der Videokamera beschreibt insbesondere die präzise Lage und Orientierung der Kamera im Raum. Zweckmäßigerweise sind hierfür die intrinsischen Kameraparameter verfügbar. Weiterbildungsgemäß kann vorgesehen sein, weitere Informationsquellen, insbesondere mittels Fahrzeug-zu-X Kommunikation empfangene Informationen, für die Bestimmung der Transformationsvorschrift heranzuziehen.

Die Erfindung betrifft weiterhin ein Sensorsystem für eine Verkehrsinfrastruktureinrichtung, umfassend zumindest eine Videokamera mit einem ersten Erfassungsbereich der Verkehrsinfrastruktureinrichtung und zumindest eine Radareinrichtung mit einem zweiten Erfassungsbereich der Verkehrsinfrastruktureinrichtung, wobei der erste Erfassungsbereich und der zweite Erfassungsbereich zumindest teilweise überlappen und zumindest eine Fahrbahn mit einer Mehrzahl an Fahrspuren der Verkehrsinfrastruktureinrichtung erfassen, , wobei das Sensorsystem konfiguriert ist, ein Verfahren gemäß der Erfindung auszuführen.

Entsprechend wenigstens einer Ausführungsform umfasst das beschriebene Sensorsystem eine oder mehrere Recheneinrichtungen zur Ausführung des Verfahrens.

Mit dem vorgeschlagenen Verfahren bzw. Sensorsystem können die Nachteile bestehender Lösungen überwunden werden. Insbesondere kann eine Transformationsvorschrift zwischen einem Kamerakoordinatensystem einer Videokamera und einem Radarkoordinatensystem einer Radareinrichtung einer Verkehrsinfrastruktureinrichtung automatisiert ermittelt werden, wodurch beispielsweise einzelnen Pixeln des Videobildes eine Entsprechung in den Radardaten zugeordnet werden kann bzw. umgekehrt. Zweckmäßigerweise sind die Videodaten und die Radardaten hierfür im gleichen Zeitsystem verfügbar. Der Bedarf für manuelle Unterstützung kann dadurch erheblich reduziert bzw. gänzlich vermieden werden, da beispielsweise ein manuelles Markieren der Daten (sog. Labeling) entbehrlich ist.

Insbesondere handelt es sich bei dem Sensorsystem um ein ortsfestes Sensorsystem für eine Verkehrsinfrastruktureinrichtung. Unter einem solchen sei insbesondere ein Sensorsystem verstanden, das stationär für den betreffenden Verwendungszeck für die jeweilige Verkehrsinfrastruktureinrichtung errichtet wurde. Hiervon zu unterscheiden sind insbesondere Sensorsysteme, deren Zweck auf die mobile Anwendung beispielsweise in Fahrzeugen bzw. mittels Fahrzeugen gerichtet ist.

Unter einer Verkehrsinfrastruktureinrichtung sei beispielsweise verstanden, ein land-, wasser- oder luftgebundener Verkehrsweg wie beispielsweise eine Straße, eine Schiene, ein Wasserverkehrsweg, ein Flugverkehrsweg oder eine Kreuzung der genannten Verkehrswege oder eine beliebige andere Verkehrsinfrastruktureinrichtung, welche zum Transport von Personen oder Nutzlast geeignet ist. Besonders vorteilhaft erweist sich der Einsatz des Sensorsystems für eine Fahrbahnkreuzung, insbesondere mit mehreren zuführenden Fahrspuren und deren vordere Haltepositionen im Erfassungsbereich der Sensoren.

Ein Verkehrsteilnehmer kann beispielsweise ein Fahrzeug, ein Radfahrer oder Fußgänger sein. Ein Fahrzeug kann beispielsweise ein Kraftfahrzeug, insbesondere ein Personenkraftfahrzeug, ein Lastkraftfahrzeug, ein Motorrad, ein Elektrokraftfahrzeug oder ein Hybridkraftfahrzeug, ein Wasserfahrzeug oder ein Luftfahrzeug sein.

In einer Weiterbildung des angegebenen Sensorsystems weist das angegebene System einen Speicher auf. Dabei ist das angegebene Verfahren in Form eines Computerprogramms in dem Speicher hinterlegt und die Recheneinrichtung zur Ausführung des Verfahrens vorgesehen, wenn das Computerprogramm aus dem Speicher in die Recheneinrichtung geladen ist.

Gemäß einem weiteren Aspekt der Erfindung umfasst ein Computerprogramm Programmcodemittel, um alle Schritte eines der angegebenen Verfahren durchzuführen, wenn das Computerprogramm durch eine Recheneinrichtung des Systems ausgeführt wird.

Gemäß einem weiteren Aspekt der Erfindung enthält ein Computerprogrammprodukt einen Programmcode, der auf einem computerlesbaren Datenträger gespeichert ist und der, wenn er auf einer Datenverarbeitungseinrichtung ausgeführt wird, eines der angegebenen Verfahren durchführt.

### [BESCHREIBUNG DER FIGUREN]

Einige besonders vorteilhafte Ausgestaltungen der Erfindung sind in den Unteransprüchen angegeben. Weitere bevorzugte Ausführungsformen ergeben sich auch aus der nachfolgenden Beschreibung von Ausführungsbeispielen an Hand von Figuren.

In schematischer Darstellung zeigen:
- Fig. 1: eine Ausführungsform des Verfahrens,
- Fig. 2: eine weitere Ausführungsform des Verfahrens,
- Fig. 3: a) Zeitlich kumuliertes Summenbild aus Radardaten des Erfassungsbereichs der Radareinrichtung, wobei die Radareinrichtung nicht eingezeichnet links im Bild mit Blickrichtung nach rechts angeordnet ist,

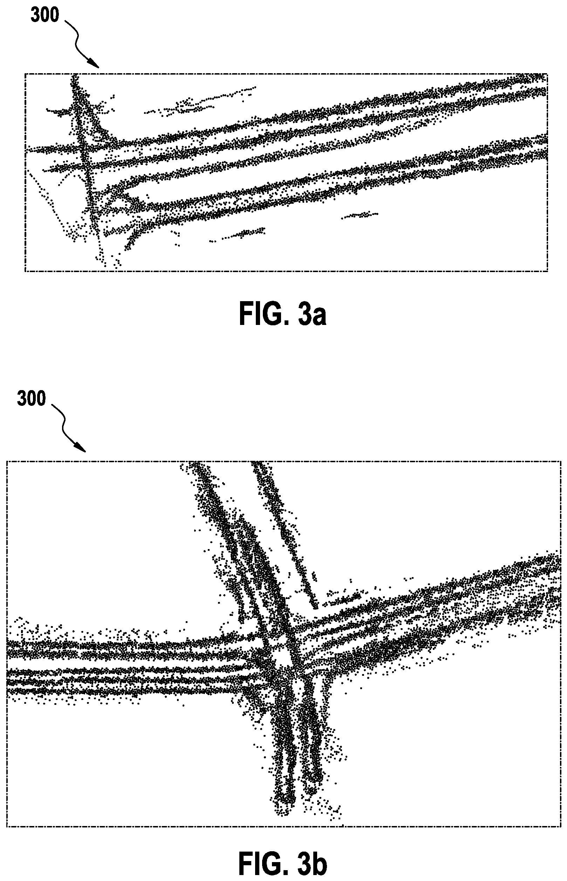

- Fig. 3: b) Summenbild einer Verkehrskreuzung aus Radardaten mehrerer zueinander kalibrierten Radareinrichtungen im selben Koordinatensystem,

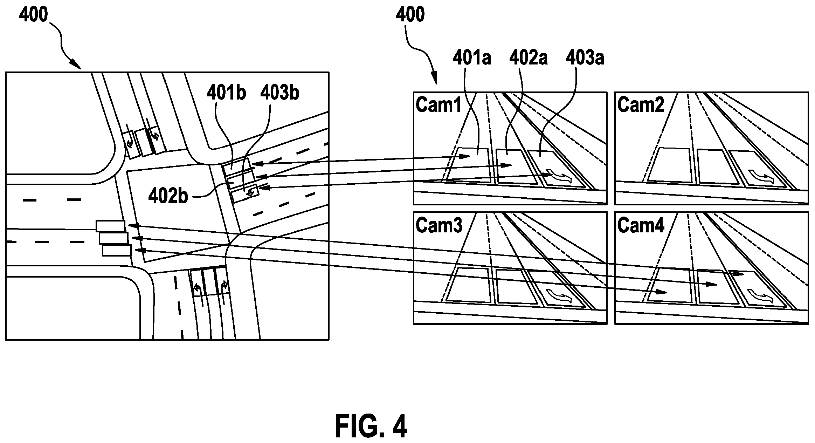

- Fig. 4: Zuordnung der vorderen Haltepositionen der Verkehrsteilnehmer,

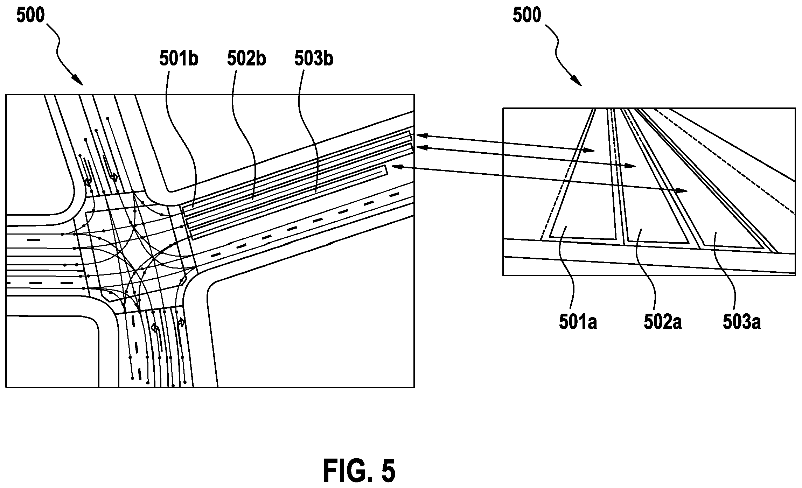

- Fig. 5: Zuordnung der Fahrspuren der Verkehrsteilnehmer,

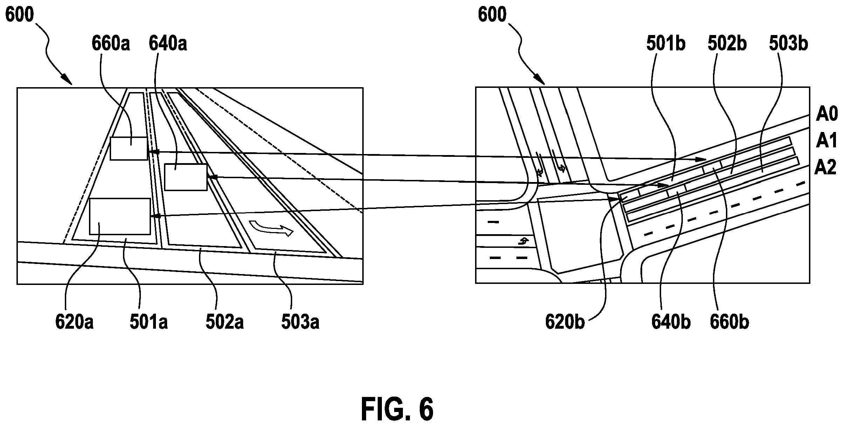

- Fig. 6: Zuordnung der Verkehrsteilnehmer als solches, und

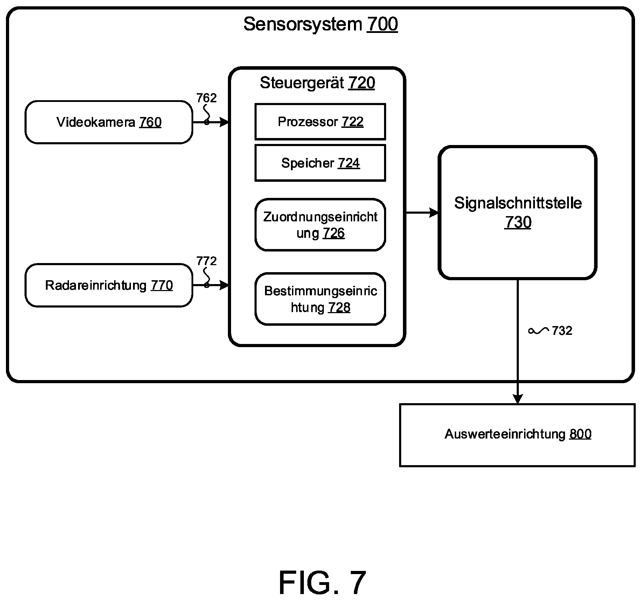

- Fig. 7: eine beispielhafte Ausführungsform des Sensorsystems.

### [DETAILLIERTE BESCHREIBUNG DER FIGUREN]

Um eine kurze und einfache Beschreibung der Ausführungsbeispiele zu ermöglichen, werden im wesentlichen gleich wirkende Elemente mit den gleichen Bezugszeichen versehen.

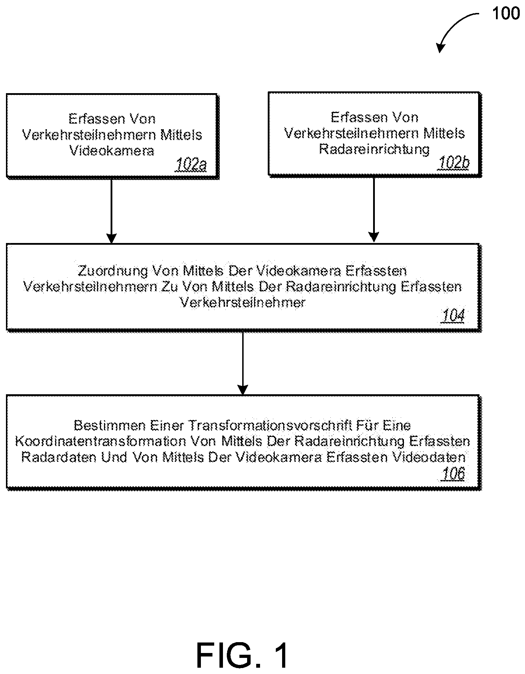

Die Fig. 1 zeigt eine Ausführungsform des Verfahrens 100 zur Ausführung durch ein Sensorsystem 700, wie es an einem Ausführungsbeispiel anhand von Fig. 7 beschrieben ist, für eine Verkehrsinfrastruktureinrichtung 300, 400, 500 und 600 der Figu-ren 3 bis 6 am Beispiel einer Straßenverkehrskreuzung. In einem Schritt 102a erfolgt ein Erfassen von Verkehrsteilnehmern 620, 640, 660 mittels einer Radareinrichtung 770 des Sensorsystems 700 gemäß Fig. 7 mit einem ersten Erfassungsbereich der Verkehrsinfrastruktureinrichtung 300, 400, 500 und 600 der Fig. 3, 4, 5 und 6, und separat hiervon in einem Schritt 102b ein Erfassen von Verkehrsteilnehmern 620, 640, 660 mittels einer Videokamera 760 des Sensorsystems 700 der Figur 7 mit einem zweiten Erfassungsbereich der Verkehrsinfrastruktureinrichtung 300, 400, 500 und 600 der Figuren 3, 4, 5 und 6, wobei der erste Erfassungsbereich und der zweite Erfassungsbereich sich zumindest teilweise überlappen und zumindest eine Fahrbahn mit einer Mehrzahl an Fahrspuren der Verkehrsinfrastruktureinrichtung 300, 400, 500 und 600 erfassen. Eine Transformationsvorschrift für eine Koordinatentransformation von mittels der Radareinrichtung 770 erfassten Radardaten und von mittels der Videokamera 760 erfassten Videodaten wird dabei auf Grundlage einer Zuordnung von mittels der Videokamera 760 erfassten Verkehrsteilnehmern 620, 640, 660 zu mittels der Radareinrichtung 770 erfassten Verkehrsteilnehmern 620, 640, 660 bestimmt.

Entsprechend dieses Ausführungsbeispiels erfolgt die Radarerfassung in x-y-Koordinaten des Radarkoordinatensystems, wie in Fig. 3 a) und b) gezeigt. Die Kameraerfassung erfolgt beispielsgemäß in Pixel-Koordinaten (Videobild) der Videokamera, wie den schematischen Darstellungen der Figuren 4, 5 und 6 entnehmbar ist. Entsprechend zumindest einer Ausführungsform, definiert die mittels des Verfahrens 100 und 200 bestimmte Transformationsvorschrift eine Koordinatentransformation zwischen dem Radarkoordinatensystem und dem Kamerakoordinatensystem in welchem die Videodaten erfasst werden. Alternativ oder in Ergänzung erfolgt die Koordinatentransformation von dem Radarkoordinatensystem und dem Kamerakoordinatensystem in ein drittes Koordinatensystem, in welchem die Daten zusammengeführt werden. Hierfür sind insbesondere jeweilige Transformationsvorschriften aus den jeweiligen Koordinatensystemen in das dritte Koordinatensystem vorgesehen. Mittels der ermittelten Transformationsvorschrift ist somit eine Zuordnung von in dem einen Koordinatensystem erfassten Objekten bzw. Verkehrsteilnehmern und in dem anderen Koordinatensystem erfassten mutmaßlich identischen Objekten bzw. Verkehrsteilnehmern möglich.

In einem Schritt 104 erfolgt eine Zuordnung von mittels der Videokamera erfassten Verkehrsteilnehmern zu mittels der Radareinrichtung erfassten Verkehrsteilnehmern. Hierunter sei eine Assoziation identischer Verkehrsteilnehmer in den Videodaten und den Radardaten verstanden, unabhängig davon, welche Vorgehensweise hierfür gewählt wird und was Ausgangspunkt der Zuordnung darstellt.

In einem Schritt 106 wird zur Ermittlung der Transformationsvorschrift für zumindest einen zugeordneten Verkehrsteilnehmer an zumindest einem Zeitpunkt zumindest ein Punktepaar in Radar- und Kamerakoordinaten erfasst, wobei sich über eine betrachtete Zeitdauer somit zwei Punktmengen mit jeweils einem eineindeutig zugeordneten (korrespondierenden) Punkt in der anderen Menge ergibt. Hieraus wird entsprechend dieses Beispiels eine Homographiematrix als Transformationsvorschrift zwischen der Radardetektions- und der Kamerabildebene bestimmt. Zusätzlich kann zur Vermeidung von Detektions- und Zuordnungsfehlern der erfassten Punkte ein Optimierungsverfahren, wie beispielsweise RANSAC, eingesetzt werden. Da üblicherweise deutlich mehr Punktpaare erzeugt werden, als für die Homegraphieberechnung benötigt werden, ergibt sich üblicherweise auch keine Verschlechterung der Genauigkeit der berechneten Transformationsvorschrift bzw. der Homographiematrix.

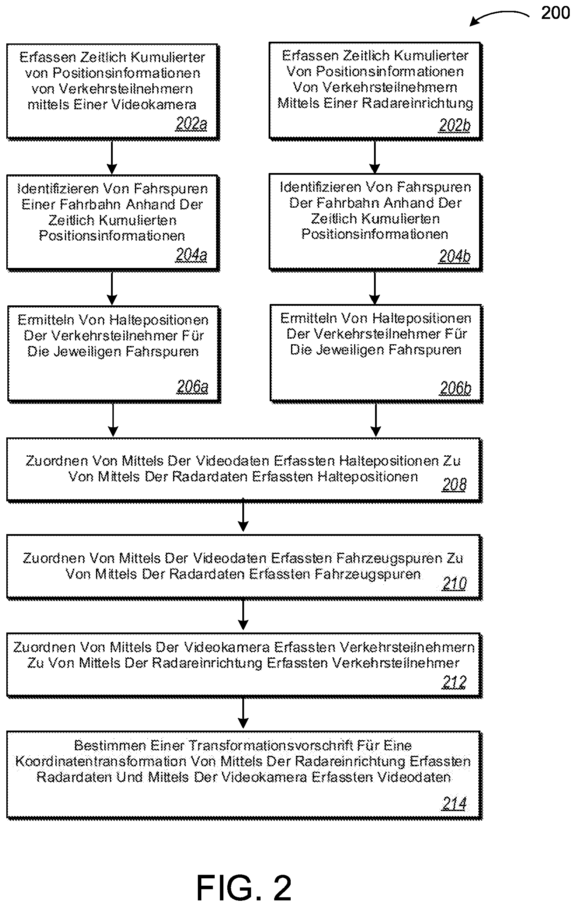

Die Fig. 2 zeigt eine weitere Ausführungsform des Verfahrens. In einem Schritt 202a erfolgt ein zeitlich kumuliertes Erfassen von Verkehrsteilnehmern 620, 640, 660 mittels der Radareinrichtung 770 mit einem ersten Erfassungsbereich der Verkehrsinfrastruktureinrichtung 300, 400, 500 und 600, und separat hiervon in einem Schritt 202b ein zeitlich kumuliertes Erfassen von Verkehrsteilnehmern 620, 640, 660 mittels der Videokamera 760 mit einem zweiten Erfassungsbereich der Verkehrsinfrastruktureinrichtung 300, 400, 500 und 600, wobei der erste Erfassungsbereich und der zweite Erfassungsbereich sich zumindest teilweise überlappen und zumindest eine Fahrbahn 320, 420, 520, 620 mit einer Mehrzahl an Fahrspuren der Verkehrsinfrastruktureinrichtung 300, 400, 500 und 600 erfassen.

Die Erfassung erfolgt hierbei insbesondere auf Grundlage von durch die Videokamera 760 bereitgestellten Videodaten 762 bzw. auf Grundlage von durch die Radareinrichtung 770 bereitgestellten Radardaten 772. Ergebnis der zeitlich kumulierten Erfassung der Positionsinformationen repräsentieren insbesondere jeweils für die Radardaten 772 und die Videodaten 762 im betreffenden Koordinatensystem darstellbare summarische Bewegungsverläufe der Verkehrsteilnehmer über den Beobachtungszeitraum. Mit anderen Worten erfolgt die Identifikation der Fahrspurverläufe durch kumulierte Erfassung von Verkehrsteilnehmerpositionen bzw. Erfassung von deren Bewegungsverläufen, wobei die erfassten Positionsinformationen insbesondere zunächst bezogen auf das jeweilige Koordinatensystem, Kamerakoordinatensystem und/oder Radarkoordinatensystem, ist. Beispielhaft ist die kumulierte Erfassung in den Figuren 3 a) und b) für die Radarerfassung dargestellt. Fig. 3 a) zeigt hierbei das Ergebnis der Erfassung mittels einer einzelnen Radareinrichtung 770 für einen Kreuzungsarm und Fig. 3 b) das Ergebnis einer fusionierten Erfassung mehrerer Radareinrichtungen für die gesamte Kreuzung.

Weiterbildungsgemäß erfolgt die zeitlich kumulierte Erfassung von Positionsinformationen von mittels der Videokamera 760 erfassten Verkehrsteilnehmern und/oder die zeitlich kumulierte Erfassung von Positionsinformationen von mittels der Radareinrichtung 770 erfassten Verkehrsteilnehmern über eine vorgegebene und/oder anpassbare Zeitdauer. Unter anpassbar in diesem Sinne sei insbesondere eine manuell änderbar vorgebbare Zeitspanne und/oder eine automatisierte Anpassung der Zeitdauer in Abhängigkeit oder bis zum Erreichen einer vorgegebenen Bedingung, beispielsweise eines Gütemaßes der Erfassung, verstanden.

In einem Schritt 204a erfolgt eine Identifikation der jeweiligen Fahrspuren der Fahrbahn anhand der mittels der Videokamera 760 erfassten zeitlich kumulierten Positionsinformationen und parallel dazu in Schritt 204b eine Identifikation der jeweiligen Fahrspuren der Fahrbahn anhand der mittels der Radareinrichtung 770 erfassten zeitlich kumulierten Positionsinformationen. Somit wird insbesondere unabhängig voneinander in den Bildern der Videokamera 760 bzw. anhand der Videodaten 762 sowie anhand der Radardaten 772 der Radareinrichtung 770 eine Identifikation der jeweiligen Fahrspuren vorgenommen. In Folge der jeweiligen kumulierten Erfassung der Positionsinformationen bilden sich deutliche Häufungen von Detektionen im Besonderen auf den Mittelachsen der Fahrspuren der Fahrbahn aus. Diese Maxima können entsprechend für die Identifikation der jeweiligen Fahrbahnen herangezogen werden.

Entsprechend wenigstens einer Ausführungsform erfolgt für die Identifikation der Fahrspurverläufe durch kumulierte Erfassung der Verkehrsteilnehmerpositionen eine Auswahl der von der Videokamera und der Radareinrichtung erfassten Verkehrsteilnehmer nach Verkehrsteilnehmern, die sich bewegen oder zuvor schon bewegt haben, und/oder Verkehrsteilnehmern, die als Fahrzeug klassifiziert wurden. Hierfür kann es sich als zweckmäßig erweisen eine Klassifizierung der erfassten Verkehrsteilnehmer in Kamera- und/oder Radardaten heranzuziehen bzw. entsprechend klassifizierte Objektdaten durch die verarbeitende Recheneinrichtung zu empfangen.

Entsprechend wenigstens einer Ausführungsform werden an ermittelte Maxima der mittels der Videokamera erfassten zeitlich kumulierten Positionsinformationen und/oder an ermittelte Maxima der mittels der Radareinrichtung erfassten zeitlich kumulierten Positionsinformationen Polynomzüge, insbesondere Splines, approximiert. Wie bereits beschrieben, bilden sich deutliche Häufungen von Detektionen üblicherweise auf den Mittelachsen der Fahrspuren. An diese ermittelten Maxima werden entsprechend dieser Ausführung Polynomzüge approximiert, welche damit die Fahrspurverläufe in den jeweiligen Sensorkoordinatensystemen mathematisch repräsentieren. Ein Beispiel für ein Ergebnis einer diesbezüglichen Polynomzugapproximation ist im linken Teilbild der Fig. 5 zu sehen, welche auf Basis der Videodaten erzeugt wurden.

In einem Schritt 206a werden Haltepositionen der Verkehrsteilnehmer bezüglich der jeweiligen identifizierten Fahrspuren unter Heranziehung der mittels der Videokamera 760 erfassten zeitlich kumulierten Positionsinformationen und der mittels der Radareinrichtung 770 erfassten zeitlich kumulierten Positionsinformationen separat ermittelt. Insbesondere werden hierbei die vorderen Haltepositionen der Verkehrsteilnehmer erfasst. Dies ist beispielsweise dann gegeben, wenn die Verkehrsteilnehmer an einer Haltelinie einer Kreuzung stoppen.

Entsprechend wenigstens einer Ausführungsform wird für die Ermittlung der vorderen Haltepositionen der Fahrspuren ein Maximum der zeitlich kumulierten Positionsinformationen der betreffenden Fahrspur ermittelt. Das Maximum der Erfassung ergibt sich hierbei insbesondere aus der im Vergleich zur Erfassung bewegter Verkehrsteilnehmer zeitlich längeren Verweildauer an einem Ort und somit für diesen Ort häufigeren Erfassung über eine betreffende Zeitdauer. Weiterbildungsgemäß kann vorgesehen sein, zu diesem Zweck unmittelbar im wesentlichen stehende Objekte der betreffenden Fahrspur zu ermitteln, falls die Geschwindigkeit der Objekte ermittelbar ist. Alternativ oder in Ergänzung kann vorgesehen sein, die zu der Videokamera 760 und/oder der Radareinrichtung 770 nächstgelegenen lokalen Maxima als Halteposition für die jeweiligen Fahrspuren heranzuziehen. Voraussetzung dafür kann jedoch die jeweilige Anordnung der Sensoren sowie der entsprechende Erfassungsbereich in Richtung der erfassten Fahrbahn mit nächstliegenden Haltelinien sein. Diese Vorgehensweise kann auch als Kriterium bzw. zur Unterstützung der Auffindung eines entsprechenden Maximums in Kombination mit wenigstens einer der vorher beschriebenen Vorgehensweise, beispielsweise als Startpunkt einer entsprechenden Suche, verwendet werden.

In einem Schritt 208 wird eine durch entsprechende Pfeile veranschaulichte Zuordnung zwischen den mittels der Videokamera 760 bzw. Videodaten 762 ermittelten Haltepositionen 401a, 402a, 403a, wie in Fig. 4 dargestellt, und den mittels der Radareinrichtung 770 bzw. Radardaten 772 ermittelten Haltepositionen, 401b, 402b, 403b, wie ebenfalls in Fig. 4 dargestellt, vorgenommen. In Fig. 4 ist dies am Beispiel einer Erfassung Cam1 bis Cam 4 einer Kreuzung durch vier Videokameras und vier Radareinrichtungen gezeigt. Auf die Bezeichnung der weiteren dargestellten Haltepositionen mit Bezugszeichen wurde der Übersichtlichkeit halber verzichtet. Weiterbildungsgemäß wird hierzu insbesondere eine zeitliche Belegung von anhand der Videodaten 762 identifizierten Haltepositionen mit anhand der Radardaten 772 identifizierten Haltepositionen kombiniert. Es ergibt sich eine Anzahl an Assoziationsmöglichkeiten, welche dem Produkt aus der Anzahl der identifizierten Haltepositionen aus den Videodaten 762 und der Anzahl der identifizierten Haltepositionen aus den Radardaten 772 entspricht.

Entsprechend wenigstens einer Ausführungsform erfolgt die Zuordnung zwischen den mittels der Videodaten 762 ermittelten Haltepositionen und den mittels der Radardaten 772 ermittelten Haltepositionen, indem ein Vergleich erfasster Zeitpunkte vorgenommen wird, an denen sich Verkehrsteilnehmer an den Haltepositionen befinden und/oder auf die Haltepositionen bewegen und/oder die Haltepositionen verlassen.

Für die Kombination kann beispielsweise jeweils der binäre Belegungszustand - Fahrzeug an Halteposition ja oder nein - über eine gewisse Zeitspanne von zum Beispiel einige Minuten mittels einer XNOR-Verknüpfung kombiniert werden. Eine XNOR Verknüpfung ergibt eine 1 bei gleichem und eine 0 bei ungleichem Zustand. Haltepositionen, für die eine vorgegebene Mindestanzahl von Wechseln des Belegungszustands (0→1, 1→0) während der vorgegebenen Erfassungszeit nicht erreicht werden, werden insbesondere ignoriert oder die Erfassungszeit entsprechend verlängert, um eine ausreichende statistische Auswertungsgrundlage zu gewährleisten. Die Kombinationsmöglichkeiten können insbesondere nach Zeitanteil bzw. Anzahl übereinstimmender Ausgangswerte sortiert und hieraus bspw. zumindest eine Assoziationstabelle mit den wahrscheinlichsten Zuordnungen der Haltepositionen aus den Radardaten und Videodaten erstellt werden.

Eine ergänzend oder alternativ anwendbare Methode, die sich im Besonderen auch für Sensoren eignet, die nichtbinäre oder kontinuierliche Daten liefern können, wie z.B. die Belegungswahrscheinlichkeit einer Halteposition, ist die Betrachtung der Kreuzkovarianz. Diese kann als kreuzweises Assoziationsmaß zwischen den verschiedenen Sensorausgaben bestimmt werden, um die Zuordnung der Haltepositionen aus den Videodaten und Radardaten festzustellen.

In einem Schritt 210 wird eine durch entsprechende Pfeile veranschaulichte Zuordnung zwischen den mittels der Videodaten 762 identifizierten Fahrspuren 501a, 502a, 503a und den mittels der Radardaten 772 identifizierten Fahrspuren 501b, 502b, 503b auf Basis der zugeordneten Haltepositionen der Verkehrsteilnehmer vorgenommen, wie in Fig. 5 dargestellt, wobei im Vergleich zu Fig. 4 die Zuordnung für die Erfassung lediglich durch eine Videokamera 760 und eine Radareinrichtung 770 gezeigt ist. Weiterbildungsgemäß wird dabei eine Zuordnung zwischen mittels der Videokamera 760 erfassten Verkehrsteilnehmern und mittels der Radareinrichtung 770 erfassten Verkehrsteilnehmern unter Berücksichtigung der zugeordneten Fahrspuren vorgenommen. Dies ist dadurch effektiv möglich, da die Haltepositionen Maxima der bereits ermittelten Fahrspuren bilden und diesen somit unmittelbar zugeordnet sind und die Zuordnung der Haltepositionen der verschiedenen Sensorkoordinatensysteme damit die Zuordnung der Fahrspuren ermöglicht.

In einem Schritt 212 wird eine Zuordnung zwischen mittels der Videokamera 760 erfassten Verkehrsteilnehmern 620a, 640a, 660a und mittels der Radareinrichtung 770 erfassten Verkehrsteilnehmern 620b, 640b, 660b unter Berücksichtigung der zugeordneten Fahrspuren in der Weise vorgenommen, dass der mittels der Radareinrichtung 770 erfasste Verkehrsteilnehmer, der sich auf einer bestimmten Fahrspur zu einem Zeitpunkt am nächsten an der Halteposition befindet, dem mittels der Videokamera 760 erfassten Verkehrsteilnehmer entspricht, welcher auf der dieser Fahrspur zugeordneten Fahrspur am nächsten an der dieser Halteposition zugeordneten Halteposition befindet. Weiterbildungsgemäß kann vorgesehen sein, auch Verkehrsteilnehmer, welche am zweit-, dritt- etc. nächsten an den Haltepositionen angeordnet sind, jeweils zuzuordnen.

In einem Schritt 214 erfolgt die Bestimmung der Transformationsvorschrift für die Koordinatentransformation von mittels der Radareinrichtung 770 erfassten Radardaten 772 und von mittels der Videokamera 760 erfassten Videodaten 762, beispielsweise wie bereits für das Ausführungsbeispiel anhand von Figur 1 beschrieben, auf Grundlage einer Zuordnung der mittels der Videokamera 760 erfassten Verkehrsteilnehmern 620a, 640a, 660a zu mittels der Radareinrichtung 770 erfassten Verkehrsteilnehmern 620b, 640b, 660b. Mit der automatisiert bestimmten Transformationsvorschrift können insbesondere im Weiteren mit der Videokamera 660 und der Radareinrichtung 670 separat erfasste Verkehrsteilnehmer einander zugeordnet und deren Positionsinformationen beispielsweise in ein übereinstimmendes Koordinatensystem überführt werden.

Die Figur 7 zeigt eine Ausführungsform des Sensorsystem für eine Verkehrsinfrastruktureinrichtung, umfassend zumindest eine Videokamera 760 mit einem ersten Erfassungsbereich der Verkehrsinfrastruktureinrichtung und zumindest eine Radareinrichtung 770 mit einem zweiten Erfassungsbereich der Verkehrsinfrastruktureinrichtung, wobei der erste Erfassungsbereich und der zweite Erfassungsbereich zumindest teilweise überlappen und zumindest eine Fahrbahn mit einer Mehrzahl an Fahrspuren der Verkehrsinfrastruktureinrichtung erfassen, wobei das Sensorsystem konfiguriert ist ein Verfahren entsprechend zumindest einer der beschriebenen Ausführungsformen bzw. Weiterbildungen des beschriebenen Verfahrens, beispielsweise wie anhand von Fig. 1 und Fig. 2 beschrieben, auszuführen.

Entsprechend wenigstens einer Ausführungsform umfasst das beschriebene Sensorsystem 700 eine oder mehrere Recheneinrichtungen, wie beispielsweise Steuergerät 720, zur Ausführung des Verfahrens. Steuergerät 720 umfasst beispielsgemäß Prozessor 722 und Datenspeicher 724. Zudem umfasst die beispielgemäße Ausführungsform des Sensorsystems 700 eine Zuordnungseinrichtung zur Zuordnung von durch die Videokamera 760 erfassten Verkehrsteilnehmern zu von durch die Radareinrichtung 770 erfassten Verkehrsteilnehmern. Außerdem umfasst Sensorsystem eine Bestimmungsreinrichtung 728 zur Bestimmung einer Transformationsvorschrift für eine Koordinatentransformation von mittels der Radareinrichtung 770 erfassten Radardaten 772 und von mittels der Videokamera 760 erfassten Videodaten 762. Steuergerät 720 kann verarbeitete Daten an eine Signalschnittstelle 730 zur Übermittlung an eine Auswerteeinrichtung 800 ausgeben oder Daten von der Auswerteeinrichtung empfangen.

Mit dem vorgeschlagenen Verfahren bzw. Sensorsystem kann insbesondere eine Transformationsvorschrift zwischen einem Kamerakoordinatensystem der Videokamera 760 und einem Radarkoordinatensystem der Radareinrichtung 770 einer Verkehrsinfrastruktureinrichtung automatisiert ermittelt werden, wodurch beispielsweise einzelnen Pixeln des Videobildes eine Entsprechung in den Radardaten zugeordnet werden kann bzw. umgekehrt. Zweckmäßigerweise sind die Videodaten 762 und die Radardaten 772 hierfür im gleichen Zeitsystem verfügbar. Dadurch wird ermöglicht die automatische Detektion und Lokalisierung von Fahrzeugen und anderen Verkehrsteilnehmern insbesondere durch intelligente Infrastruktureinrichtungen zur intelligenten Steuerung von Lichtsignalanlagen und Analysen zur längerfristigen Optimierung des Verkehrsflusses zu verbessern.

Sofern sich im Laufe des Verfahrens herausstellt, dass ein Merkmal oder eine Gruppe von Merkmalen nicht zwingend nötig ist, so wird anmelderseitig bereits jetzt eine Formulierung zumindest eines unabhängigen Anspruchs angestrebt, welcher das Merkmal oder die Gruppe von Merkmalen nicht mehr aufweist. Hierbei kann es sich beispielsweise um eine Unterkombination eines am Anmeldetag vorliegenden Anspruchs oder um eine durch weitere Merkmale eingeschränkte Unterkombination eines am Anmeldetag vorliegenden Anspruchs handeln. Derartige neu zu formulierende Ansprüche oder Merkmalskombinationen sind als von der Offenbarung dieser Anmeldung mit abgedeckt zu verstehen.

Es sei ferner darauf hingewiesen, dass Ausgestaltungen, Merkmale und Varianten der Erfindung, welche in den verschiedenen Ausführungen oder Ausführungsbeispielen beschriebenen und/oder in den Figuren gezeigt sind, beliebig untereinander kombinierbar sind. Einzelne oder mehrere Merkmale sind beliebig gegeneinander austauschbar. Hieraus entstehende Merkmalskombinationen sind als von der Offenbarung dieser Anmeldung mit abgedeckt zu verstehen.

Rückbezüge in abhängigen Ansprüchen sind nicht als ein Verzicht auf die Erzielung eines selbständigen, gegenständlichen Schutzes für die Merkmale der rückbezogenen Unteransprüche zu verstehen. Diese Merkmale können auch beliebig mit anderen Merkmalen kombiniert werden.

Merkmale, die lediglich in der Beschreibung offenbart sind oder Merkmale, welche in der Beschreibung oder in einem Anspruch nur in Verbindung mit anderen Merkmalen offenbart sind, können grundsätzlich von eigenständiger erfindungswesentlicher Bedeutung sein. Sie können deshalb auch einzeln zur Abgrenzung vom Stand der Technik in Ansprüche aufgenommen werden.

Allgemein sei darauf hingewiesen, dass unter Fahrzeug-zu-X Kommunikation insbesondere eine direkte Kommunikation zwischen Fahrzeugen und/oder zwischen Fahrzeugen und Infrastruktureinrichtungen verstanden wird. Beispielsweise kann es sich also um Fahrzeug-zu-Fahrzeug Kommunikation oder um Fahrzeug-zu-Infrastruktur Kommunikation handeln. Sofern im Rahmen dieser Anmeldung auf eine Kommunikation zwischen Fahrzeugen Bezug genommen wird, so kann diese grundsätzlich beispielsweise im Rahmen einer Fahrzeug-zu-Fahrzeug Kommunikation erfolgen, welche typischerweise ohne Vermittlung durch ein Mobilfunknetz oder eine ähnliche externe Infrastruktur erfolgt und welche deshalb von anderen Lösungen, welche beispielsweise auf ein Mobilfunknetz aufbauen, abzugrenzen ist. Beispielsweise kann eine Fahrzeug-zu-X Kommunikation unter Verwendung der Standards IEEE 802.11p oder IEEE 1609.4 erfolgen. Eine Fahrzeug-zu-X Kommunikation kann auch als C2X-Kommunikation oder V2X-Kommunikation bezeichnet werden. Die Teilbereiche können als C2C (Car-to-Car), V2V (Vehicle-to-Vehicle) oder C2I (Car-to-Infrastructure), V2I (Vehicle-to-Infrastrukture) bezeichnet werden. Die Erfindung schließt jedoch Fahrzeug-zu-X Kommunikation mit Vermittlung beispielsweise über ein Mobilfunknetz explizit nicht aus.

Verschiedene Implementierungen der hier beschriebenen Systeme und Techniken können in der digitalen elektronischen Schalttechnik, in integrierten Schaltungen, besonders konstruierten ASICs (anwendungsspezifische integrierte Schaltungen), Computerhardware, Firmware, Software und/oder Kombinationen davon realisiert werden. Diese verschiedenen Implementierungen können die Implementierung in einem oder mehreren Computerprogrammen einschließen, die ausführbar und/oder interpretierbar auf einem programmierbaren System sind, einschließlich mindestens eines programmierbaren Prozessors, der einen besonderen oder allgemeinen Zweck haben kann, gekoppelt mit dem Empfang von Daten und Anweisungen von einem Speichersystem, mindestens einem Eingabegerät und mindestens einem Ausgabegerät und der Übertragung von Daten und Anweisungen an ein Speichersystem.

Diese Computerprogramme (auch Programme, Software, Softwareanwendungen oder Code genannt) enthalten Maschinenanweisungen für einen programmierbaren Prozessor und können in einer hochstufigen prozeduralen und/oder objektorientierten Programmiersprache und/oder in der Montage-/Maschinensprache implementiert werden. Die Begriffe "maschinenlesbares Medium" und "computerlesbares Medium" beziehen sich in der vorliegenden Fassung auf alle Computerprogramme (z. B. Magnetplatten, optische Datenträger, Speicher, SPS), die zur Bereitstellung von Maschinenanleitungen und/oder Daten für einen programmierbaren Prozessor verwendet werden, einschließlich eines maschinenlesbaren Mediums, das Maschinenanweisungen als maschinenlesbares Signal erhält. Der Begriff "maschinenlesbares Signal" bezieht sich auf jedes Signal, das zur Bereitstellung von Maschinenanweisungen und/oder Daten für einen programmierbaren Prozessor verwendet wird.

Die Implementierungen des Gegenstands und der in dieser Spezifikation beschriebenen Funktionsabläufe können in der digitalen elektronischen Schaltung oder in Computersoftware, Firmware oder Hardware, einschließlich der in dieser Spezifikation und ihren strukturellen Entsprechungen angegebenen Strukturen, oder in Kombinationen von einer oder mehreren von ihnen implementiert werden. Darüber hinaus können die in dieser Spezifikation beschriebenen Inhalte als ein oder mehrere Computerprogrammprodukte implementiert werden, d. h. ein oder mehrere Module von Computerprogrammanleitungen, die auf einem computerlesbaren Datenträger kodiert sind, zur Ausführung durch oder zur Steuerung des Betriebs von Datenverarbeitungsgeräten. Das computerlesbare Medium kann ein maschinenlesbares Speichergerät, ein maschinenlesbares Speichersubstrat, ein Speichergerät, eine Materialzusammensetzung, die ein maschinenlesbares Propagationssignal auslöst, oder eine Kombination aus einem oder mehreren davon sein. Die Begriffe "Datenverarbeitungsgeräte", "Rechengerät" und "Rechenprozessor" umfassen alle Geräte, Geräte und Maschinen zur Datenverarbeitung, beispielsweise einen programmierbaren Prozessor, einen Computer oder mehrere Prozessoren oder Computer. Das Gerät kann neben Hardware auch Code enthalten, der eine Ausführungsumgebung für das betreffende Computerprogramm erstellt, z. B. Code, der eine Prozessorfirmware, einen Protokollstapel, ein Datenbankmanagementsystem, ein Betriebssystem oder eine Kombination von einem oder mehreren davon darstellt. Ein propagiertes Signal ist ein künstlich erzeugtes Signal, z. B. ein maschinengeneriertes elektrisches, optisches oder elektromagnetisches Signal, das erzeugt wird, um Informationen zur Übertragung an geeignete Empfängereinrichtungen zu kodieren.

Eine Recheneinrichtung kann dabei jedwede Einrichtung sein, die ausgebildet ist, um zumindest eines der genannten Signale zu verarbeiten. Insbesondere kann die Recheneinrichtung ein Prozessor, beispielsweise ein ASIC, ein FPGA, ein digitaler Signalprozessor, ein Hauptprozessor (CPU von engl.: "Central Processing Unit"), ein Multizweckprozessor (MPP von engl.: "Multi Purpose Prozessor") oder Ähnliches sein.

## Patentansprüche

1. Verfahren (100) zur Ausführung durch ein Sensorsystem (700) für eine Verkehrsinfrastruktureinrichtung, wobei ein Erfassen (102a) von Verkehrsteilnehmern mittels zumindest einer Videokamera (760) des Sensorsystems (700), welche einen ersten Erfassungsbereich der Verkehrsinfrastruktureinrichtung aufweist, und ein Erfassen (102b) von Verkehrsteilnehmern mittels zumindest einer Radareinrichtung (770) des Sensorsystems (700), welche einen zweiten Erfassungsbereich der Verkehrsinfrastruktureinrichtung aufweist, wobei der erste Erfassungsbereich und der zweite Erfassungsbereich zumindest teilweise überlappen und zumindest eine Fahrbahn mit einer Mehrzahl an Fahrspuren der Verkehrsinfrastruktureinrichtung erfassen, wobei eine Transformationsvorschrift für eine Koordinatentransformation von mittels der Radareinrichtung (770) erfassten Radardaten (772) und von mittels der Videokamera (760) erfassten Videodaten (762) auf Grundlage einer Zuordnung (104) von mittels der Videokamera (760) erfassten Verkehrsteilnehmern zu mittels der Radareinrichtung (770) erfassten Verkehrsteilnehmern bestimmt (106) wird, wobei eine zeitlich kumulierte Erfassung von Positionsinformationen von mittels der Videokamera erfassten Verkehrsteilnehmern und eine zeitlich kumulierte Erfassung von Positionsinformationen von mittels der Radareinrichtung erfassten Verkehrsteilnehmern vorgenommen wird und eine Identifikation der jeweiligen Fahrspuren anhand der mittels Videokamera erfassten zeitlich kumulierten Positionsinformationen und eine Identifikation der jeweiligen Fahrspuren anhand der mittels der Radareinrichtung erfassten zeitlich kumulierten Positionsinformationen erfolgt, **dadurch gekennzeichnet, dass** Haltepositionen der Verkehrsteilnehmer bezüglich der jeweiligen Fahrspuren unter Heranziehung der mittels der Videokamera erfassten zeitlich kumulierten Positionsinformationen und Haltepositionen der Verkehrsteilnehmer bezüglich der jeweiligen Fahrspuren unter Heranziehung der mittels der Radareinrichtung erfassten zeitlich kumulierten Positionsinformationen ermittelt werden und eine Zuordnung zwischen den mittels der Videokamera ermittelten Haltepositionen und den mittels der Radareinrichtung ermittelten Haltepositionen vorgenommen wird.

2. Verfahren gemäß Anspruch 1, **dadurch gekennzeichnet, dass** eine Zuordnung zwischen den mittels der Videokamera identifizierten Fahrspuren und den mittels der Radareinrichtung identifizierten Fahrspuren auf Basis der zugeordneten Haltepositionen erfolgt und die Zuordnung zwischen mittels der Videokamera erfassten Verkehrsteilnehmern und mittels der Radareinrichtung erfassten Verkehrsteilnehmern unter Berücksichtigung der zugeordneten Fahrspuren vorgenommen wird.

3. Verfahren gemäß zumindest einem der vorhergehenden Ansprüche, **dadurch gekennzeichnet, dass** eine Auswahl, der von der Videokamera und der Radareinrichtung erfassten Verkehrsteilnehmer nach Verkehrsteilnehmern erfolgt, die sich bewegen oder zuvor schon bewegt haben, und/oder die als Fahrzeug klassifiziert wurden.

4. Verfahren gemäß zumindest einem der vorhergehenden Ansprüche, **dadurch gekennzeichnet, dass** die zeitlich kumulierte Erfassung von Positionsinformationen von mittels der Videokamera erfassten Verkehrsteilnehmern und/oder die zeitlich kumulierte Erfassung von Positionsinformationen von mittels der Radareinrichtung erfassten Verkehrsteilnehmern über eine vorgegebene und/oder anpassbare Zeitdauer erfolgt.

5. Verfahren gemäß zumindest einem der vorhergehenden Ansprüche, **dadurch gekennzeichnet, dass** an ermittelte Maxima der mittels der Videokamera erfassten zeitlich kumulierten Positionsinformationen und/oder an ermittelte Maxima der mittels der Radareinrichtung erfassten zeitlich kumulierten Positionsinformationen Polynomzüge approximiert werden.

6. Verfahren gemäß zumindest einem der vorhergehenden Ansprüche, **dadurch gekennzeichnet, dass** eine Ermittlung vorderer Haltepositionen der Fahrspuren vorgenommen wird, wobei ein Maximum der zeitlich kumulierten Positionsinformationen der betreffenden Fahrspur ermittelt wird.

7. Verfahren gemäß zumindest einem der vorhergehenden Ansprüche, **dadurch gekennzeichnet, dass** eine Zuordnung zwischen den mittels der Videokamera ermittelten Haltepositionen und den mittels der Radareinrichtung ermittelten Haltepositionen vorgenommen wird, indem ein Vergleich erfasster Zeitpunkte erfolgt, an denen sich Verkehrsteilnehmer an den Haltepositionen befinden und/oder auf die Haltepositionen bewegen und/oder die Haltepositionen verlassen.

8. Verfahren gemäß zumindest einem der vorhergehenden Ansprüche, **dadurch gekennzeichnet, dass** zur Ermittlung der Transformationsvorschrift für zumindest einen zugeordneten Verkehrsteilnehmer an zumindest einem Zeitpunkt zumindest ein zugeordnetes Punktepaar in Radar- und Kamerakoordinaten erfasst und aus einer Mehrzahl an diesbezüglichen Punktpaaren eine Homographiematrix zwischen Radardetektions- und Kamerabildebene ermittelt wird.

9. Sensorsystem (700) für eine Verkehrsinfrastruktureinrichtung, umfassend zumindest eine Videokamera (760) mit einem ersten Erfassungsbereich der Verkehrsinfrastruktureinrichtung und zumindest eine Radareinrichtung (770) mit einem zweiten Erfassungsbereich der Verkehrsinfrastruktureinrichtung, wobei der erste Erfassungsbereich und der zweite Erfassungsbereich zumindest teilweise überlappen und zumindest eine Fahrbahn mit einer Mehrzahl an Fahrspuren der Verkehrsinfrastruktureinrichtung erfassen, wobei das Sensorsystem (700) konfiguriert ist ein Verfahren gemäß zumindest einem der vorhergehenden Ansprüche auszuführen.

## Claims

1. A method (100) for execution by a sensor system (700) for a traffic infrastructure device, wherein comprises detecting (102a) of road users by means of at least one video camera (760) of the sensor system (700), which has a first detection area of the traffic infrastructure device, and detecting (102b) of road users by means of at least one radar device (770) of the sensor system (700), which has a second detection area of the traffic infrastructure device, wherein the first detection area and the second detection area at least partially overlap and capture at least one roadway with a plurality of lanes of the traffic infrastructure device, wherein a transformation rule for coordinate transformation of radar data (772) detected by means of the radar device (770) and of video data (762) detected by means of the video camera (760) is determined (106) on the basis of an assignment (104) from road users detected by the video camera (760) to road users detected by means of the radar device (770), wherein a time-cumulative detection of position information of road users detected by means of the video camera and a time-cumulated detection of position information of road users detected by means of the radar device are performed, and an identification of the respective lanes on the basis of the time-cumulative position information detected by the video camera, and an identification of the respective lanes is carried out on the basis of the time-cumulative position information detected by means of the radar device, **characterised in that** stopping positions of road users relative to their respective lanes are determined using the time-cumulative position data detected by means of the video camera, and stopping positions of road users relative to their respective lanes are determined using the time-cumulative position data detected by means of the radar device and an association is made between the stopping positions determined by means of the video camera and the stopping positions determined by means of the radar device.

2. The method according to claim 1, **characterised in that** an association is made between the lanes identified by way of the video camera and the lanes identified by way of the radar device on the basis of the associated stopping positions and the association is made between road users detected by way of the video camera and road users detected by way of the radar device taking into account the associated lanes.

3. The method according to any one of the preceding claims, **characterised in that** the road users detected by the video camera and the radar device are detected according to road users that are moving or have previously moved and/or that have been classified as vehicles.

4. The method according to any one of the preceding claims, **characterised in that** the cumulative detection of position information over time from road users detected by way of the video camera and/or the cumulative detection of position information over time from road users detected by way of the radar device takes place over a predefined and/or adjustable period.

5. The method according to any one of the preceding claims, **characterised in that** determined maxima of the position information time-cumulative detected by way of the video camera and/or determined maxima of the position information time-cumulative detected by way of the radar device are approximated by polylines.

6. The method according to any one of the preceding claims, **characterised in that** front stopping positions of the lanes are determined, wherein a maximum of the position information accumulated over time regarding the lane in question is determined.

7. The method according to any one of the preceding claims, **characterised in that** an association between the stopping positions determined by way of the video camera and the stopping positions determined by way of the radar device is made by comparing detected times at which road users are located at the stopping positions and/or are moving to the stopping positions and/or leave the stopping positions.

8. The method according to any one of the preceding claims, **characterised in that** to determine the transformation rule for at least one associated road user at at least one point in time, at least one associated pair of points is detected in radar and camera coordinates, and a homography matrix between the radar detection plane and the camera image plane is determined from a plurality of such pairs of points.

9. A sensor system (700) for a traffic infrastructure facility, comprising at least one video camera (760) having a first detection area of the traffic infrastructure facility and at least one radar device (770) having a second detection area of the traffic infrastructure facility, wherein the first detection area and the second detection area at least partially overlap and detect at least one road having a plurality of lanes of the traffic infrastructure facility, wherein the sensor system (700) is configured to carry out a method according to at least one of the preceding claims.

## Revendications

1. Procédé (100) destiné à être mis en œuvre par un système de détection (700) pour une installation d'infrastructure routière, comprenant la détection (102a) d'usagers de la route au moyen d'au moins une caméra vidéo (760) du système de détection (700), laquelle présente une première zone de détection de l'installation d'infrastructure routière, et une détection (102b) d'usagers de la route au moyen d'au moins un dispositif radar (770) du système de détection (700), lequel présente une seconde zone de détection de l'installation d'infrastructure routière, dans lequel la première zone de détection et la seconde zone de détection se chevauchent au moins partiellement et détectent au moins une chaussée comportant une pluralité de voies de circulation de l'installation d'infrastructure routière, dans lequel une règle de transformation destinée à une transformation de coordonnées des données radar (772) détectées au moyen du dispositif radar (770) et des données vidéo (762) détectées au moyen de la caméra vidéo (760) est déterminée (106) sur la base d'une mise en correspondance (104) des usagers de la route détectés au moyen de la caméra vidéo (760) avec les usagers de la route détectés au moyen du dispositif radar (770), dans lequel une détection cumulée dans le temps d'informations de position d'usagers de la route détectés au moyen de la caméra vidéo est effectuée et une détection cumulée dans le temps d'informations de position d'usagers de la route détectés au moyen du dispositif radar est effectuée, et une identification des voies de circulation respectives est réalisée sur la base des informations de position cumulées dans le temps détectées au moyen de la caméra vidéo ainsi que sur la base des informations de position cumulées dans le temps détectées au moyen du dispositif radar, **caractérisé en ce que** des positions d'arrêt des usagers de la route par rapport aux voies de circulation respectives sont déterminées à l'aide des informations de position cumulées dans le temps détectées au moyen de la caméra vidéo, que des positions d'arrêt des usagers de la route par rapport aux voies de circulation respectives sont déterminées à l'aide des informations de position cumulées dans le temps détectées au moyen du dispositif radar, et qu'une mise en correspondance entre les positions d'arrêt déterminées au moyen de la caméra vidéo et les positions d'arrêt déterminées au moyen du dispositif radar est effectuée.

2. Procédé selon la revendication 1, **caractérisé en ce qu'**une mise en correspondance entre les voies de circulation identifiées au moyen de la caméra vidéo et les voies de circulation identifiées au moyen du dispositif radar est effectuée sur la base des positions d'arrêt mises en correspondance, et **en ce que** la mise en correspondance entre les usagers de la route détectés au moyen de la caméra vidéo et les usagers de la route détectés au moyen du dispositif radar est effectuée avec prise en compte des voies de circulation mises en correspondance.

3. Procédé selon au moins l'une des revendications précédentes, **caractérisé en ce qu'**une sélection des usagers de la route détectés par la caméra vidéo et le dispositif radar est effectuée en fonction des usagers de la route qui sont en mouvement ou qui se sont déjà déplacés, et/ou qui ont été classifiés comme des véhicules.

4. Procédé selon au moins l'une des revendications précédentes, **caractérisé en ce que** la détection cumulée dans le temps d'informations de position d'usagers de la route détectés au moyen de la caméra vidéo et/ou la détection cumulée dans le temps d'informations de position d'usagers de la route détectés au moyen du dispositif radar est effectuée pendant une durée prédéfinie et/ou adaptable.

5. Procédé selon au moins l'une des revendications précédentes, **caractérisé en ce que** des chaînes de polynômes sont approximées aux maxima déterminés des informations de position cumulées dans le temps détectées au moyen de la caméra vidéo et/ou aux maxima déterminés des informations de position cumulées dans le temps détectées au moyen du dispositif radar.

6. Procédé selon au moins l'une des revendications précédentes, **caractérisé en ce qu'**une détermination des positions d'arrêt en tête des voies de circulation est effectuée, dans lequel un maximum des informations de position cumulées dans le temps de la voie de circulation concernée est déterminé.

7. Procédé selon au moins l'une des revendications précédentes, **caractérisé en ce qu'**une mise en correspondance entre les positions d'arrêt déterminées au moyen de la caméra vidéo et les positions d'arrêt déterminées au moyen du dispositif radar est effectuée par comparaison des instants détectés auxquels des usagers de la route se trouvent aux positions d'arrêt et/ou se déplacent vers les positions d'arrêt et/ou quittent les positions d'arrêt.

8. Procédé selon au moins l'une des revendications précédentes, **caractérisé en ce que**, pour déterminer la règle de transformation, au moins une paire de points correspondante en coordonnées radar et en coordonnées de la caméra est détectée pour au moins un usager de la route mis en correspondance à au moins un instant, et **en ce qu'**une matrice d'homographie entre le plan de détection radar et le plan image de la caméra est déterminée à partir d'une pluralité desdites paires de points.

9. Système de détection (700) pour une installation d'infrastructure routière, comprenant au moins une caméra vidéo (760) présentant une première zone de détection de l'installation d'infrastructure routière et au moins un dispositif radar (770) présentant une seconde zone de détection de l'installation d'infrastructure routière, dans lequel la première zone de détection et la seconde zone de détection se chevauchent au moins partiellement et couvrent au moins une chaussée comportant une pluralité de voies de circulation de l'installation d'infrastructure routière, dans lequel le système de détection (700) est configuré pour mettre en œuvre un procédé selon au moins l'une des revendications précédentes.
